# FASCICULE DE BREVET EUROPEEN

(11) **EP 1 232 906 B1**
(45) Date de publication et mention de la délivrance du brevet: **29.12.2010**
(21) Numéro de dépôt: 02290330.6
(22) Date de dépôt: 11.02.2002
(51) Int. Cl.: B60P 3/22

(54) **Citerne de collecte de lait**
Milchsammelbehälter
Milk collecting tank

(30) Priorité: 15.02.2001 FR 0102077
(43) Date de publication de la demande: 21.08.2002
(73) Titulaire: BONGRAIN S.A., 78220 Viroflay (FR)
(72) Inventeur: Cazajus, Henri, 78310 Maurepas (FR); Helaine, Bernard, 50890 Condé-sur-Vire (FR); Lorillon, Daniel, 89570 Lasson (FR)
(74) Mandataire: Bertrand, Didier

(56) Documents cités:
- DE-A- 3 116 090
- DE-A- 3 240 535
- GB-A- 2 264 271
- US-A- 2 067 993
- US-A- 2 185 030

## Description

La présente invention concerne une citerne de collecte de lait, du type comportant une cuve montée sur au moins un essieu arrière et munie d'un moyen d'attelage à l'avant, la cuve formant au moins un compartiment destiné à contenir le lait collecté, le compartiment comportant au moins une paroi sensiblement verticale, au moins une ouverture de visite et au moins un évent, la citerne comportant encore un ou plusieurs des éléments suivants : des moyens de lavage du compartiment, des moyens de remplissage, des moyens de prélèvement de lait, des moyens de vidange du lait et un tuyau de collecte du lait. La citerne est tractée par un camion et circule de fermes en fermes pour collecter le lait de façon hygiénique et venir le vider dans les cuves des usines de traitement de lait.

Les citernes à lait sont connues depuis longtemps et on en trouvera des exemples comprenant certains des éléments ci-dessus dans les documents US 2160477, US 2229793 ou US 4018354. Elles sont le plus souvent constituées d'une cuve en acier inoxydable à section elliptique d'une capacité cohérente avec la réglementation sur la charge à l'essieu.

Une caractéristique générale des citernes connues est de prévoir un ou deux trous d'homme à la partie supérieure de la cuve, munis d'un couvercle, lui-même généralement équipé d'un évent pour laisser entrer l'air lorsqu'on vide la cuve ou qu'on la remplit. Quelquefois, l'évent est prévu de manière séparée du couvercle de trou d'homme, mais toujours à la partie supérieure de la cuve, pour éviter d'être atteint par le liquide contenu dans la cuve. L'accès aux trous d'homme situés à environ trois mètres du sol nécessite des echelles permanentes (y compris passerelles, gardes-fous qui alourdissent le camion et augmentent son prix, et constituent un élément de danger pour les personnes qui y montent.

Mais un problème encore plus important est celui de la sécurité alimentaire. On doit empêcher tout acte de malveillance qui viserait le lait transporté ou l'hygiène de la citerne, que celle-ci soit pleine ou vide.

Il faut donc interdire l'accès à tous les points névralgiques de la citerne. Or, en dehors des deux points mentionnés, il y en a d'autres qui sont les divers éléments tels que les moyens de lavage du compartiment (classiquement constitués par une rampe de lavage dont le raccordement est accessible à l'arrière de la cuve), des moyens de prélèvement de lait (classiquement constitués par des robinets de prélèvement de cuve, accessibles sur les côtés ou à l'arrière de la cuve), des moyens de vidange du lait (dont un raccordement est généralement accessible à l'arrière de la cuve) et un tuyau de collecte du lait, de 10 à 15 mètres de long (généralement rangé le long de la citerne et accessible en permanence). Tous ces éléments constituent autant de points sur lesquels il serait utile de pouvoir empêcher efficacement toute malveillance, et la chose est malaisée compte tenu de l'éparpillement des divers points à sécuriser sur la citerne.

On connaît par US 2 185 030 un camion citerne présentant les caractéristiques du préambule de la revendication 1 annexée. On connaît par DE 32 40 535 un camion citerne à bière présentant des aménagements spécifiques.

Le but de l'invention est de résoudre ce problème et de proposer une nouvelle cuve qui ne présente pas ces inconvénients mais au contraire permette une sécurité et une hygiène impeccables dans la collecte du lait.

L'invention atteint son but du fait que la citerne est conforme à la revendication 1 annexée. Notamment l'ouverture de visite est constituée non plus par un trou d'homme mais par une porte étanche formée dans la paroi sensiblement verticale du compartiment, avantageusement la paroi arrière du compartiment. Il n'est de cette manière plus nécessaire de prévoir les échelles et autres accessoires pour pénétrer dans la cuve. La citerne est de préférence de forme parallélépipédique et peut comporter des éléments raidisseurs de parois ; cette forme permet d'intégrer plus facilement la porte étanche dans la paroi. Pour atteindre pleinement les objectifs sécuritaires mentionnés plus haut, il est avantageux que la citerne comporte à l'arrière de la cuve un coffre ou une cabine sécurisée, dans laquelle débouche ladite porte étanche. Cette cabine est sécurisée grâce à une porte fermant à clef. Il est particulièrement avantageux de regrouper dans cette cabine tous les points névralgiques de la citerne ; dans cette cabine débouchent donc un ou plusieurs des éléments suivants : un conduit relié à l'évent ou aux évents, le raccord de la rampe de lavage, le raccord de vidange, le raccord de prélèvement ou avantageusement un préleveur automatique. Le conduit relié à l'évent est de préférence intégré dans la paroi supérieure isolée de la cuve, et comporte avantageusement une vanne s'ouvrant automatiquement avec l'ouverture de la porte de la cabine sécurisée. Le tuyau de collecte du lait débouche dans cette cabine sécurisée et est de préférence enroulé sur un enrouleur disposé au niveau du plancher de la cabine, muni d'un système mécanique d'enroulement à câble de rappel.

De cette manière, le chauffeur du camion-citerne peut sécuriser en un seul mouvement tous les points névralgiques de la citerne en fermant à clef la porte de la cabine arrière.

Si un deuxième compartiment étanche est nécessaire, par exemple un compartiment plus petit à l'avant de la citerne, on prévoit dans ce cas une deuxième porte étanche, cette fois-ci une porte latérale, située sur la paroi latérale de la citerne, de préférence du côté du chauffeur.

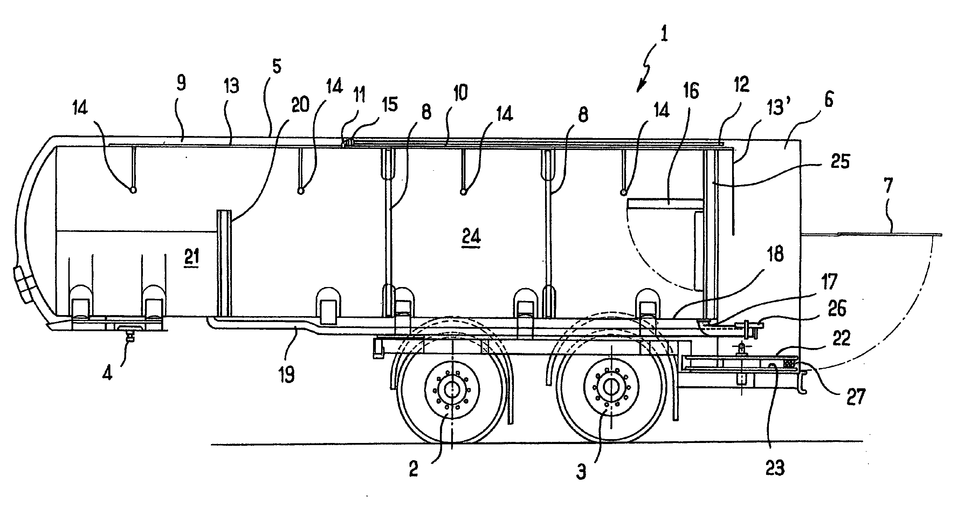

L'invention sera mieux comprise grâce à la description suivante, se référant à la figure unique annexée qui est une vue de côté schématique en coupe partielle d'une citerne conforme à l'invention,

La citerne 1 est une semi-remorque portée par deux essieux 2 et 3 situés à l'arrière et attelé par un pivot d'attelage 4 à un camion tracteur non représenté. Elle peut comporter des béquilles amovibles non représentées pour permettre son appui (surtout cuve pleine) quand elle n'est pas remorquée. La citerne comporte une cuve 5 parallélépipédique de grande capacité (par exemple de l'ordre de 27000 L), s'étendant sur pratiquement toute la longueur de la citerne, sauf à l'arrière où elle se prolonge par une cabine arrière 6 fermée par une porte arrière relevable 7 formant protection avec gouttière. Le relevage de la porte 7 est assuré par un vérin commandé par un bouton à clé sur le côté de la citerne.

L'intérieur de la citerne est renforcé par des raidisseurs 8, par exemple sous forme de parois laissant le passage d'un homme. L'intérieur de la citerne peut former, comme représenté, un seul compartiment vrai 24, ou bien être divisé en plusieurs (généralement deux) compartiments vrais, c'est-à-dire indépendants. Une cloison intermédiaire 20 à trop-plein forme un faux-compartiment 21 à l'avant de la cuve, permettant une meilleure répartition des charges quand la cuve n'est pas pleine.

Le toit 9 de la cuve 5 comporte une isolation à l'intérieur de laquelle passent d'une part deux conduites 10 raccordant deux évents 11 disposés côte-à-côte vers le milieu de la citerne à l'intérieur de la cabine 6 où elles débouchent en 12, et d'autre part la rampe de lavage 13, raccordée en 13' dans la cabine, et alimentant des buses de lavage 14 réparties sur la longueur de la cuve et tombant du toit 9. Sur les conduites 10 sont interposées deux vannes pneumatiques papillons 15, commandées par l'ouverture de la porte 7 de la cabine arrière, de manière à permettre le remplissage ou la vidange de la cuve. La rampe 13 comprend quant à elle un clapet anti-retour non représenté permettant d'éviter le reflux du lait qui aurait pu éventuellement s'introduire par les buses de lavage 14 lorsque la cuve est pleine et compte tenu des mouvements du lait dans la cuve.

L'intérieur de la cuve 5 est accessible par une porte autoclave 16 relevable vers l'intérieur de la cuve, située à l'arrière, formée dans la paroi arrière verticale 25 de la cuve et accessible par la cabine 6. Cette porte 16, formant un seuil d'environ 800 mm à partir du plan des pieds (faux-plancher 22), permet de passer le tronc d'une personne, de façon ergonomique, pour une inspection, interdit l'inspection de la citerne en cuve pleine, contrairement aux trous d'hommes classiques, ce qui constitue une sécurité supplémentaire.

Une conduite de remplissage ou vidange arrière 17 débouche dans le sol 18 de la cuve 5, près de la porte autoclave 16, et présente un embout de raccordement situé dans la cabine 6.

Une conduite de remplissage ou vidange avant 19, raccordable au tuyau de collecte par un embout situé dans la cabine 6, débouche dans le sol du faux-compartiment 21. Deux préleveurs non représentés servent d'une part au prélèvement destiné à l'échantillon de chaque enlèvement et d'autre part à celui destiné à l'échantillon moyen de la citerne.

La cabine arrière 6 possède un faux-plancher 22 au-dessous duquel est disposée une roue d'enroulement automatique 23 du tuyau de collecte représenté schématiquement par quelques spires 27. Avantageusement, le tuyau de collecte peut être connecté en permanence à l'une ou l'autre des conduites de remplissage par un raccord non représenté prévu sur le moyeu de la roue 23.

## Revendications

1. Citerne de collecte de lait, du type comportant une cuve (5) montée sur au moins un essieu arrière (2, 3), la cuve (5) formant au moins un compartiment (24) destiné à contenir le lait collecté, le compartiment (24) comportant au moins une paroi arrière sensiblement verticale (25), une ouverture de visite (16) et au moins un évent (11), l'ouverture de visite étant constituée par une porte étanche (16) formée dans la paroi arrière sensiblement (25) verticale du compartiment (24), la citerne comportant à l'arrière de la cuve une cabine sécurisée (6), dans laquelle débouchent ladite porte étanche (16), ainsi qu'un conduit (12) relié à l'évent (11), un raccord de vidange et un raccord de prélèvement reliés respectivement à des moyens de vidange et de remplissage (17, 19) et à des moyens de prélèvement du lait, **caractérisée en ce que** la citerne comporte des moyens de lavage (13,14) du compartiment et un tuyau de collecte (27) du lait disposé dans ladite cabine sécurisée, les moyens de lavage (13, 14) comportant une rampe de lavage (13) dans la paroi supérieure de la cuve débouchant par un raccord (13') dans ladite cabine sécurisée (6), le conduit (12) relié à l'évent (11) comprenant une vanne s'ouvrant automatiquement avec l'ouverture de la porte sécurisée.

2. Citerne selon la revendication 1, **caractérisée en ce que** le conduit (12) relié à l'évent (11) est intégré dans la paroi supérieure de la cuve.

3. Citerne selon l'une quelconque des revendications 1 ou 2, **caractérisée en ce que** l'évent (11) est disposé vers le milieu de la citerne.

4. Citerne selon l'une quelconque des revendications 1 à 3, **caractérisée en ce que** le tuyau de collecte du lait (27) est enroulé sur un enrouleur (23) disposé dans la cabine sécurisée(6).

5. Citerne selon l'une quelconque des revendications 1 à 4, **caractérisée en ce que** le relevage de la porte (7) est assuré par un vérin commandé par un bouton à clé sur le côté de la citerne.

6. Citerne selon l'une quelconque des revendications 1 à 5, **caractérisée en ce que** la porte étanche (16) est relevable à l'intérieur de la cuve, de façon à ce que la porte reste fermée, sous pression du lait transporté.

## Claims

1. A cistern for milk collection, of the type comprising a tank (5) mounted on at least a rear axle (2, 3), the tank (5) forming at least a compartment (24) intended to contain the collected milk, the compartment (24) including at least a substantially vertical rear wall (25), a service opening (16) and at least a vent (11), the service opening consisting in a tight door (16) formed on the substantially vertical rear wall (25) of compartment (24), the cistern comprising, at the rear of the tank, a safe made cabin (6), into which said tight door (16) opens, and also a pipe (12) connected to the vent (11), a draining connector and a tapping connector respectively connected to draining and filling means (17, 19) and to milk tapping means, **characterized in that** the cistern comprises washing means (13,14) for the compartment and a milk collecting pipe (27) provided into said safe made cabin, the washing means (13, 14) including a washing bar (13) into the upper wall of the tank coming out with a connection (13') into said safe made cabin (6), the pipe (12) connected to the vent (11) including a valve automatically opening with the opening of the safe made cabin.

2. The cistern according to claim 1, **characterized in that** the pipe (12) connected to the vent (11) is integrated into the tank upper wall.

3. The cistern according to any of claims 1 or 2, **characterized in that** the vent (11) is provided towards the middle of the cistern.

4. The cistern according to any of claims 1 to 3, **characterized in that** the milk collecting pipe (27) is rolled up on a winding up device (23) provided into the safe made cabin (6).

5. The cistern according to any of claims 1 to 4, **characterized in that** the door (7) lifting is ensured by a jack controlled by a lockable button on the cistern side.

6. The cistern according to any of claims 1 to 5, **characterized in that** the tight door (16) may be lifted from the inside of the tank, so that the door remains closed under the pressure of the transported milk.

## Patentansprüche

1. Milchsammelbehälter des Typs, der einen Tank (5) enthält, der an wenigstens einer Hinterachse (2, 3) montiert ist, wobei der Tank (5) wenigstens einen Aufnahmeraum (24) bildet, der dazu bestimmt ist, gesammelte Milch zu enthalten, wobei der Aufnahmeraum (24) wenigstens eine im Wesentlichen vertikale Rückwand (25), eine Überprüfungsöffnung (16) und wenigstens ein Lüftungsloch (11) aufweist, wobei die Überprüfungsöffnung durch eine dichte Tür (16) gebildet ist, die in der im Wesentlichen vertikalen Rückwand (25) des Aufnahmeraums (24) ausgebildet ist, wobei der Behälter an der Rückseite des Tanks eine Sicherheitszelle (6), in die die dichte Tür (16) mündet, sowie eine mit dem Lüftungsloch (11) verbundene Leitung (12), eine Entleerungsverbindung und eine Abzapfverbindung, die mit Entleerungs- und Befüllungsmitteln (17, 19) bzw. mit Milchabzapfmitteln verbunden sind, umfasst, **dadurch gekennzeichnet, dass** der Behälter Mittel (13, 14) zum Reinigen des Aufnahmeraums und einen Sammelschlauch (27) für Milch, die in der Sicherheitszelle angeordnet sind, umfasst, wobei die Reinigungsmittel (13, 14) in der oberen Wand des Tanks eine Reinigungsrampe (13) aufweisen, die durch eine Verbindung (13') in die Sicherheitszelle (6) mündet, wobei die mit dem Lüftungsloch (11) verbundene Leitung (12) ein Ventil aufweist, das sich beim Öffnen der Sicherheitstür automatisch öffnet.

2. Behälter nach Anspruch 1, **dadurch gekennzeichnet, dass** die mit dem Lüftungsloch (11) verbundene Leitung (12) in die obere Wand des Tanks integriert ist.

3. Behälter nach einem der Ansprüche 1 oder 2, **dadurch gekennzeichnet, dass** das Lüftungsloch (11) in der Nähe der Mitte des Behälters angeordnet ist.

4. Behälter nach einem der Ansprüche 1 bis 3, **dadurch gekennzeichnet, dass** der Milchsammelschlauch (27) auf eine Aufwickeleinrichtung (23), die in der Sicherheitszelle (6) angeordnet ist, aufgewickelt ist.

5. Behälter nach einem der Ansprüche 1 bis 4, **dadurch gekennzeichnet, dass** das Anheben der Tür (7) durch einen Stellzylinder sichergestellt ist, der durch einen Schlüsselschalter auf der Seite des Behälters gesteuert wird.

6. Behälter nach einem der Ansprüche 1 bis 5, **dadurch gekennzeichnet, dass** die dichte Tür (16) in den Tank anhebbar ist, derart, dass die Tür unter dem Druck der transportierten Milch geschlossen bleibt.
